# EUROPEAN PATENT SPECIFICATION

(11) **EP 3 505 384 B1**
(45) Date of publication and mention of the grant of the patent: **05.05.2021**
(21) Application number: 18248175.4
(22) Date of filing: 28.12.2018
(51) Int. Cl.: B60K 37/06, B60K 37/02

(54) **METHOD AND ASSOCIATED DEVICE FOR CONTROLLING AT LEAST ONE PARAMETER OF A VEHICLE**
VERFAHREN UND ZUGEHÖRIGE VORRICHTUNG ZUR STEUERUNG VON MINDESTENS EINEM PARAMETER EINES FAHRZEUGS
PROCÉDÉ ET DISPOSITIF ASSOCIÉ POUR COMMANDER AU MOINS UN PARAMÈTRE D'UN VÉHICULE

(30) Priority: 29.12.2017 ES 201731496
(43) Date of publication of application: 03.07.2019
(60) Divisional application: 20150190.5
(73) Proprietor: Seat, S.A., 08760 Martorell - Barcelona (ES)
(72) Inventor: GARCIA PAMPLONA, Jose Antonio, 08760 Martorell, Barcelona (ES); REGUEIRO ESTEVEZ, Borja, 08760 Martorell, Barcelona (ES); ALCOCER REDONDO, Antonio, 08760 Martorell, Barcelona (ES); MOLINA MARTINEZ, Daniel, 08760 Martorell, Barcelona (ES)
(74) Representative: Elzaburu S.L.P.

(56) References cited:
- DE-A1- 10 121 392
- DE-A1-102013 021 931
- US-A1- 2015 210 292

## Description

### OBJECT OF THE INVENTION

The object of the present invention is a method for controlling at least one parameter of a vehicle according to Claim 1, and its associated device according to Claim 11, incorporating both notable innovations and advantages.

### BACKGROUND OF THE INVENTION

Current vehicle instrument panel screens display various information to the driver or occupant. Current vehicles may have systems for detecting the orientation of said driver's gaze in order to determine whether said information is being perceived, and, optionally, whether the driver wishes to operate with said information.

In this regard a method is known in the prior art, as reflected in document US20140348389, that comprises one or more processors for controlling one or more devices arranged in the vehicle based on detecting the gaze of the occupant, in which the method comprises the steps of: i) receiving one or more images from a camera attached to the car ii) based on these images, locating one or more features associated with the body of the occupant iii) determining the direction of gaze of the occupant based on one or more body features of the occupant iv) controlling one or more devices based on the at least one direction of gaze. Thus, and in view of the foregoing, it is seen that there is still a need for having a method for managing the multiplicity of components interacted upon (radio, screen, HUD - Head Up Display) and devices interacted with while driving such as the steering wheel, rotating command and control elements, push-button command and control elements, touch screens, etc. In this respect the need is also observed for increasing efficiency in determining whether the user of the vehicle wishes to act on an actuator, or only passed their gaze over the actuator without any intention to modify it or interact with it.

In this regard a method is known in the prior art, as reflected in document US2015210292 that comprises modifying operation of at least one system of a vehicle based at least in part on a gaze direction of a driver is disclosed, receiving gaze data indicative of the gaze direction of a driver of a vehicle and modifying operation of at least one system of the vehicle based at least in part on the gaze data.

Document DE10121392 discloses a device for controlling devices by means of a viewing direction, wherein a control function is selected by means of a viewing direction and the selected control function is then carried out by means of a haptic control element, which is preferably arranged on a steering wheel.

Document DE102013021931 discloses a method for operating an operating device for a device in order to trigger a device function of the device selected by a user, a display device on a display surface Graphic object representing the device function, an eye tracker generates a viewing direction signal dependent on a viewing direction of the user, a sensor device in a predetermined holding area over which the user holds the operating device with at least one hand, determines a holding pressure of the at least one hand and generates a pressure signal dependent on the holding pressure and a control device on the basis of the Direction of view signal B checks whether the user is looking at the object. The device function is triggered if the pressure signal D fulfills a predetermined trigger criterion.

### SUMMARY

The present invention consists of a method and associated device for controlling at least one parameter of a vehicle. The point at which the driver or occupant is looking is determined using an eye sensor and it is possible to determine the component being interacted upon and the element or region within that component. Accordingly, it is possible to interact with the elements of the vehicle.

Regarding the prior art document described it is noted that in US20140348389 controlling the device or screen is based on the direction of gaze, which involves the driver having to focus their gaze on the device or screen while the control or actuation is performed. More specifically, the driver should focus their gaze on a graphical representation device and at this respect the need is also observed for increasing efficiency in determining whether the user of the vehicle wishes to act on an actuator, or only passed their gaze over the actuator without any intention to modify it or interact with it.

### DESCRIPTION OF THE INVENTION

The present invention consists of a method according to claim 1 and an associated device according to claim 11 for controlling at least one parameter of a vehicle. The point at which the driver or occupant is looking is determined using an eye sensor and it is possible to determine the component being interacted upon and the element or region within that component. Accordingly, it is possible to interact with the elements of the vehicle.

Regarding the prior art document described it is noted that in US20140348389 controlling the device or screen is based on the direction of gaze, which involves the driver having to focus their gaze on the device or screen while the control or actuation is performed. More specifically, the driver should focus their gaze on a graphical representation device and at the same time as they are focussing their visual attention on the graphical representation device, interact by means of an actuator, such as a button arranged on the instrument panel. This involves a loss of concentration on the tasks of driving during a lengthy period of time.

The distinguishing technical element in the method of the present invention is the presence of the steps that entail storing the last segment or zone of the screen whereon the user has focussed their gaze. Thus, it is avoided that the driver has to be looking at the icon on which they wish to act the whole time that the actuation lasts, by storing the last icon or parameter where the match has occurred and allowing the actuation without needing to be continuously looking. Match is understood to mean the fact that the driver or user looks at a determined area or zone of the screen, and this zone includes a parameter or function of the vehicle which may be modified by the user.

Related to the objective of increasing accuracy, another problem detected in the prior art is detecting the gaze of the driver at all times, regardless of whether the driver wishes to act on the icon or zone of the screen that their gaze has passed over or they have simply passed their gaze over that segment of the screen without intending to activate it, or act upon it. In a typical driving situation, the user looks at the vehicle's steering wheel and, when refocussing their gaze on the road, i.e. looking up from the steering wheel to the windscreen, their gaze matches some area that is capable of being activated by being in the path of the change of gaze. For example, it may match a graphical representation device arranged in the zone of the revolution counter or speedometer, or a HUD. This highlights the problem where the user, perhaps, does not wish to interact with or activate the icon or function of the vehicle.

Thus, more specifically, the method for controlling at least one parameter of a vehicle, comprises the steps of:
i) representing at least one parameter on at least one graphical representation device, wherein the at least one parameter is represented in a portion of the at least one graphical representation device;
ii) detecting an orientation of at least one eyeball of an occupant of the vehicle;
iii) determining a match between the orientation of the at least one eyeball and the portion of the at least one graphical representation device;
iv) storing the at least one parameter represented in the portion if the match between the orientation of the at least one eyeball and the portion is determined;
v) determining an actuation by the occupant; and
vi) controlling the at least one parameter, wherein controlling the at least one parameter is based on the at least one stored parameter and based on the determined actuation by the occupant.

In this way, the driver may interact with any component of the vehicle, said component or function being selectable by sight, and may also use different methods of interaction, such as by voice or gestures, on different components and graphical representation devices (radio, screen, HUD) selectable by sight.

It should be noted that a portion of at least one graphical representation device may also be understood to mean the whole of the graphical representation device of the vehicle. And an actuatable element is understood to mean an element capable of being modified, i.e. that the parameter associated with the information represented by said actuatable element is modifiable, or capable of being modified, by the user, such as, for example, a song on the radio, the level of the air conditioning fan, etc.

Advantageously, the step of determining an actuation by the occupant is a separate action from the step of determining the match between the orientation of the at least one eyeball and the portion of the at least one graphical representation device. Separate action is to be understood to mean a non-simultaneous action. In this way, the user does not have to be looking at the command to be activated at the same time as they are acting on the actuator. It should be noted in this connection that there may be an overlap between the two steps but, in general, it is not necessary for said overlap or simultaneity to occur since the portion of the at least one graphical representation device has been stored and determined as an actuatable parameter.

In a preferred embodiment of the invention, the method comprises an additional step of determining whether at least one parameter represented in the portion of the at least one graphical representation device is actuatable by the occupant, wherein step iv) comprises storing the at least one parameter represented in the portion if the at least one parameter is determined as actuatable and if the match between the orientation of the at least one eyeball and the portion is determined. In this way, the accuracy of the actuation system is improved, with no operation being performed as long as the parameter is not determined as actuatable. Actuatable parameter is understood to mean that function of the vehicle that is capable of being modified by the user. However, there will be other zones or portions of the graphical representation device that will not be capable of being modified by the user, such as a representation of a fault, a speedometer, etc.

According to the invention, step iii) comprises determining a start of the match between the orientation of at least one eyeball and the portion of the at least one graphical representation device, and comprises determining an end of the match between the orientation of at least one eyeball and the portion of the at least one graphical representation device. In this way, an improvement may be offered in the accuracy of detecting the last image portion that the occupant has looked at, on being in a position to be able to quantify the period of time in which said match has taken place.

More specifically, the method comprises counting a period of time between the start and the end of the match between the orientation of the at least one eyeball and the portion of the at least one graphical representation device, wherein step iv) comprises storing the at least one parameter represented if the period of time counted is greater than a predefined value. In this way, the processing resources and the memory of the device are optimized on which the method of the present invention is performed, by only using the processing and memory resources if the specific condition occurs that the period of time counted is greater than a predefined value. Counting the period of time ensures that the stored parameter is that with which the user actually wishes to interact, discarding all those parameters at which the user only glances and does not wish to modify.

According to the invention, the predefined value is based on the at least one parameter of the vehicle, a priority of the at least one parameter represented and/or a determined actuation history of the occupant, so that is possible to distinguish the magnitude of the predefined value according to a series of circumstances such as the type of parameter, its importance, and the operating record of said parameter. Thus, if an actuation history indicates that the user acts on the windscreen wipers when it starts raining, the predefined time value will be less. On the other hand, a parameter of the vehicle that has never been actuated or modified by the user, may comprise a greater predefined time value.

In a preferred embodiment of the invention, the method comprises defining a first area in the at least one graphical representation device, wherein the first area delimits an area wherein the at least one parameter is represented, wherein the first area is included in the portion, and defining a second area, wherein the second area delimits a zone wherein the at least one parameter may be actuated by the occupant, wherein the second area is included in the portion. In this way, a differentiation may be made between the area intended merely as a graphical representation, and the area in which the parameter may also be actuated, i.e. operated by the user-driver of the vehicle.

Thus, two areas are defined on the screen or graphical representation device. A first area wherein the information, e.g. the speedometer of the vehicle or the tank level, is displayed. And a second area, predefined as the control area wherein the gaze of the user will be detected and the parameter stored as a parameter capable of being actuated, e.g. a cruise control speed represented within the first area, which represents the speedometer. This second area is preferably less than the first area in order to limit the section wherein the gaze of the driver may be detected, thus avoiding false positives.

It should be noted that when the driver turns their gaze to this second area, and/or the detection time of their gaze is greater than a predefined time, the match will occur and the functionality of the icon will be activated. At that moment, the system stores this function as the actuatable function, being able subsequently to modify its parameters as needed.

Advantageously, the method comprises an additional step of generating a first visual effect on the graphical representation device, wherein the first visual effect is based on the match determined between the orientation of the at least one eyeball and the first area. In this way, the driver receives a call to their attention to make them aware that the direction of their gaze matches information represented in the first area of the graphical representation device.

More particularly, defining the second area comprises establishing a surface area of the second area based on the at least one parameter of the vehicle, a priority of the at least one parameter represented and/or a determined actuation history of the occupant. In this way, the surface area of the second area is assigned in a customized way to a series of variables such as the type of parameter, its importance and/or urgency, and the driver's operating record. In this way, it is provided that there is a match between the gaze of the user and a parameter of the determined vehicle, encouraging their gaze to be included in the second area of the graphical representation device.

In a preferred embodiment of the invention, step iii) comprises determining a match between the orientation of the at least one eyeball and the second area, so that the situation materializes in which the driver is in a position to act on at least one parameter of the vehicle.

In addition, the method comprises an additional step of generating a second visual effect on the graphical representation device, wherein the second visual effect is based on the match determined between the orientation of the at least one eyeball and the second area. In this way, a second visual effect different from the first visual effect is displayed, in order to emphasize the information and/or parameters that may be modified.

In a preferred embodiment of the invention, step v) comprises determining an actuation by the occupant by means of an actuator, wherein there is one single actuator for a plurality of graphical representation devices. In this way, the user-driver always turns to the same actuator, being a more convenient operation, minimizing the possibilities of confusion over which actuator to operate. In this way, the parameter of the vehicle to actuate is selected by means of focussing the gaze on said parameter and, the value of the parameter of the vehicle is modified by means of the one single actuator of the vehicle.

More particularly, the actuator is a voice control, a gesture control or at least one button, wherein the at least one button is arranged on an instrument panel and/or on a steering wheel. In this way, the user-driver has various operating options, being able to choose the one best suited to their needs.

Moreover, it should be noted that a data processing device, preferably integrated into the vehicle, comprises at least one memory and one or more programs, wherein one or more programs are stored in said memory and configured for being executed by the data processing device. Said data processing device comprises means for executing the method for controlling the at least one parameter of the vehicle.

The attached drawings depict, by way of a non-restrictive example, a method and associated device for controlling at least one parameter of a vehicle, and the physical elements for its application, constituted in accordance with the invention. Other features and advantages of said method and associated device for controlling at least one parameter of a vehicle, the object of the present invention, will become evident from the description of a preferred, but not exclusive, embodiment, illustrating a non-restrictive example in the accompanying drawings, in which:

### BRIEF DESCRIPTION OF THE DRAWINGS

Figure 1.- Is a perspective front view of the driver's position in a vehicle with at least one graphical representation device, in accordance with the present invention.
Figure 2.- Is a perspective view of the driver's and co-driver's positions in a vehicle, in accordance with the present invention.
Figure 3.- Is a perspective view of the driver's position in a vehicle with at least one graphical representation device in accordance with the present invention.
Figure 4A.- Is a representation of the speedometer of a vehicle, with a first and second areas, in accordance with the present invention.
Figure 4B.- Is a representation of the speedometer of a vehicle, with a first and second areas and a cursor representing the gaze of the user-driver, in accordance with the present invention.
Figure 5A.- Is a plan view of the driver's position, with the driver performing a gestural operation, in accordance with the present invention.
Figure 5B.- Is a plan view of the driver's position, with the driver performing a voice operation, in accordance with the present invention.
Figure 6.- Is a schematic representation of the component elements of the device of the present invention.

### DESCRIPTION OF A PREFERRED EMBODIMENT

In view of the aforementioned figures and, according to the adopted numbering, a preferred embodiment of the invention can be seen therein, comprising the parts and elements that are described in detail below.

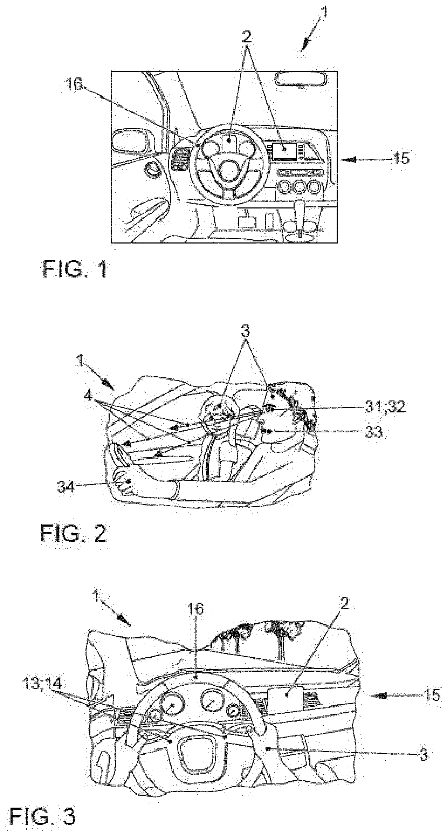

Figure 1 illustrates a perspective front view of the driver's position in a vehicle 1 with at least one graphical representation device 2. The instrument panel 15 comprising the steering wheel 16 may also be seen. In particular, there are two graphical representation devices 2, one arranged in the central zone of the instrument panel 15 and another arranged in the rear zone of the steering wheel 16.

Figure 2 illustrates a perspective view of the driver's and co-driver's positions in a vehicle 1. Both the driver and co-driver or accompanying passenger may be considered as occupants 3. The orientation 4 of the eyeball 31, may be seen in said figure, the gaze 32 of the occupant 3 being an important body variable regarding the operation of the parameters of the vehicle 1, in the context of the present invention. Other important body variables regarding the operation of the parameters of the vehicle 1 may be voice 33 and gesture 34.

Figure 3 illustrates a perspective view of the position of the driver or occupant 3 in the vehicle 1 with at least one graphical representation device 2. Likewise at least one actuator 13 may be seen preferably in the form of a button 14, located on the steering wheel 16, although it could be located at another accessible point of the instrument panel 15. The present invention has the objective that, through one single set of actuators 13, such as a group of buttons 14 arranged on the steering wheel 16, interaction may take place with various graphical representation devices 2 arranged in the vehicle 1.

Thus, the method of the present invention aims at enabling control by an occupant 3 of a plurality of functions of the vehicle 1. More specifically, the aim is for the occupant 3 to modify a parameter 12 of said functions of the vehicle 1 as described below:
- The function is represented in at least one graphical representation device 2, in particular, in a determined zone of the graphical representation device 2. There may be more than one function represented simultaneously in the same graphical representation device 2. Normally, a function of the vehicle 1 will be represented by means of a parameter 12, which is capable of being modified by the occupant 3.
- In order to know which function or parameter 12 of the vehicle 1 is to be modified, an orientation 4 of at least one eyeball 31 of the occupant 3 is detected, in order to seek a match between said orientation 4 of the at least one eyeball 31 with the position or portion 53 of the graphical representation device 2 wherein the parameter 12 is represented.
- When a match is determined between the orientation 4 of the at least one eyeball 31 and the portion 53 of the graphical representation device 2, the parameter 12 or function of the vehicle 1 is stored, so that said function will be the last on which the occupant 3 of the vehicle 1 has focussed their attention.
- If an actuation is detected on an actuator 13 of the vehicle 1 the parameter 12 or function of the vehicle 1 that has been stored, will have its value altered according to the needs of the occupant 3, in response to actuating the actuator 13.

Thus it is that, based on monitoring a position of the eyeball 31 the function or parameter 12 of the vehicle 1 to be modified is determined and, through a variation on the actuator 13, a magnitude of said parameter 12 to be modified is determined. Both actions of determining an actuation by the occupant 3 and determining a match between the orientation 4 of the at least one eyeball 31 and the portion 53 of the graphical representation device 2 are separate actions and do not have to be simultaneous, so that the occupant 3 does not have to be gazing fixedly at the function or parameter 12 represented at the same time as they are acting on the actuator 13 for modifying its magnitude.

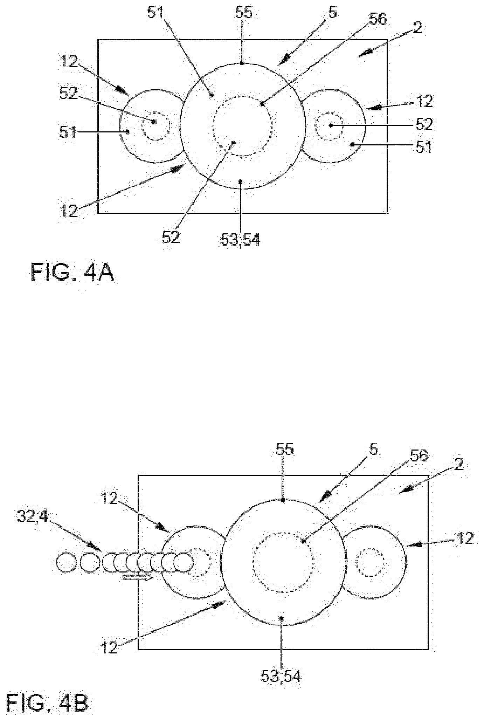

Figure 4A illustrates a representation of the speedometer of a vehicle 1 with a first area 51 and second area 52, represented in a central portion 53 of the graphical representation device 2. In said first area 51 and second area 52 an item of information 5 is represented with at least one parameter 12 of the vehicle 1. By way of example, an item of information is represented in said central position 54: the speedometer, and a parameter 12 capable of being modified by the occupant 3: a cruise control speed.

A second item of information 5 is additionally represented in Figure 4A, displayed in a left-hand portion 53 of the graphical representation device 2. Said second item of information 5 may be a temperature level of the vehicle's 1 engine. This second item of information 5 also comprises a first area 51 that represents the temperature level of the vehicle's engine and a second area 52, said second area 52 comprising a parameter 12 of the vehicle 1. In the same way, a second item of information 5 is additionally represented, displayed in a right-hand portion 53 of the graphical representation device 2. Said second item of information 5 may be a revolution counter of the vehicle 1. This second item of information 5 also comprises a first area 51, that represents a magnitude of the vehicle's revolutions and a second area 52, said second area 52 comprising a parameter 12 of the vehicle 1.

In the example represented in Figure 4A, three items of information 5 are represented in the graphical representation device 2 that are actuatable by the occupant 3, i.e. the occupant 3 can modify a value of a magnitude of the parameter 12. It could be that an item of information 5 represented in the graphical representation 2 device is not modifiable or actuatable by the occupant 3, so that the item of information 5 only comprises a first area 51, not comprising a second area 52 nor a representation of the parameter 12.

Figure 4B illustrates the graphical representation device 2 previously described in Figure 4A, additionally representing a cursor that symbolizes an evolution of the gaze 32 of the occupant 3.

Thus, the gaze 32 is expressed in a cursor, not displayed to the user-occupant 3. Said cursor is represented as a spherical shape, with a size less than or equal to the second area 52. Thus, according to an example of operation of the present invention, an orientation 4 of the at least one eyeball 31 of the occupant 3 is detected making a movement from left to right of the graphical representation device 2. The gaze 32 is focussed initially outside the graphical representation device 2 and evolves towards the inside of the graphical representation device 2.

Thus, according to a first embodiment, a match is determined between the orientation 4 of the eyeball 31 and the left-hand portion 53 of the graphical representation device, wherein the temperature of the engine is represented, said information 5 or parameter 12 is stored as a parameter that is capable of being modified by the occupant 3.

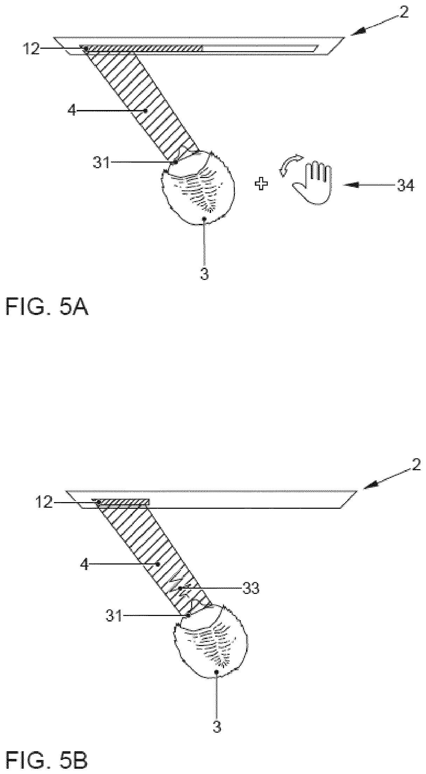

Figure 5A illustrates a plan view of the position of the driver or occupant 3, performing an operation by means of at least one gesture 34, after observing in the graphical representation device 2 an item of information 5 with at least one parameter 12. The data processing system or device 11 has stored the engine temperature parameter 12 as a parameter 12 capable of being modified by the occupant 3, so that when it determines an actuation by the occupant 3, in this particular case by means of at least one gesture 34, the parameter 12 is controlled based on the at least one determined gesture 34. Thus, the orientation 4 of the at least one eyeball 31 does not have to be focussed on the parameter 12, while this is being controlled by the occupant 3.

An example of actuation might be looking at the zone of the graphical representation device 2 of the volume of the vehicle's 1 sound system, in order to define the element or parameter 12 by sight on which to interact, and the volume of said sound system is raised or lowered with a rotational hand gesture.

Figure 5B illustrates a plan view of the position of the driver or occupant 3 performing a voice operation 33, of the selected parameter 12 by means of the orientation 4 of the eyeball 31, from the information 5 that appears on the graphical representation device 2. The data processing system or device 11 has stored the engine temperature parameter 12 as a parameter 12 capable of being modified by the occupant 3, so that when it determines an actuation by the occupant 3, in this particular case by means of at least one voice command, the parameter 12 is controlled based on the at least one determined voice command.

More specifically, as represented in Figure 4B, the information 5 is represented in the graphical representation device 2 in the following way: a first area 51 is defined in the at least one graphical representation device 2, wherein the first area 51 delimits an area wherein the at least one parameter 12 is represented, wherein the first area 51 is included in the portion 53, and a second area 52 is defined, wherein the second area 52 delimits a zone wherein the at least one parameter 12 may be actuated by the occupant 3, wherein the second area 52 is included in the portion 53.

It should be specified that the portion 53 may be of the same dimensions as the first area 51. The second area 52 may, on the other hand, be of the same dimensions as the first area 51, but may also be of smaller dimensions than the first area 51, in order to increase the accuracy with which the user-driver or occupant 3 has to look at the information 5 in order to act on same. In Figure 4A three representations are depicted wherein the first areas 51 are of larger dimensions than the second areas 52. It should be noted that the second areas 52 are not visually represented in the graphical representation device 2.

According to another aspect of the invention, as depicted in Figure 4B, the method comprises an additional step of generating a first visual effect 55 in the graphical representation device 2. Thus, when the gaze 32 or orientation 4 of the at least one eyeball 31 matches the first area 51 represented on the left of the graphical representation device 2, a first visual effect 55 is generated in said first area 51.

This would be the case in which the eyes or eyeballs 31 only pass through the zones of the first area 51. Where this situation occurs, a first visual effect 55 may be produced such as increasing the intensity of the image, changing the colour of the outline, or modifying the opacity of the first area 51.

According to a second embodiment, and with reference to Figure 4B, a start of the match is determined between the orientation 4 of at least one eyeball 31 and the second area 52, represented by dashed lines. In particular, the match is determined between the orientation 4 of the at least one eyeball 31 and the second area 52 represented on the left of the graphical representation device 2. This match comprises determining a start of the match and an end of the match, i.e. knowing when the occupant 3 starts focussing their gaze 32 on the second area 52.

In addition, when a start of the match occurs between the orientation 4 of the at least one eyeball 31 and the second area 52 a second visual effect 56 is generated in the graphical representation device 2. Thus, the first visual effect 55 comprises modifying a visual appearance of the first area 51, in particular, increasing the intensity of the image, changing the colour of the outline and/or modifying the opacity of the first area 51. Furthermore, and in the event that the eyes or eyeballs 31 pass through the zones of the second area 52 of the image a second visual effect 56 is generated different from the first visual effect 55, to emphasize, not only that the occupant 3 has focussed their gaze 32 on the information 5, but also that said information 5 may be controlled as the occupant 3 wishes.

In order to ensure that the occupant 3 wishes to modify a determined parameter 12 of the vehicle 1, it is established that the parameter 12 will be stored only if the start and end of the match between the orientation 4 of the at least one eyeball 31 and the second area 52 exceeds a predefined value. In this way, if the gaze 32 is focussed more than a predefined time value on the central second area 52 of the graphical representation device 2, the cruise speed will be stored as a parameter 12 capable of being modified by the occupant 3, representing said action by means of the second effect 56. Otherwise, if the occupant 3 only shifts their gaze on the first area 51 and the second area 52, but their gaze does not remain in the second area 52 a predefined time value, only a first effect 55 will be generated, but the parameter 12 will not be stored, so that it cannot be modified by the occupant 3.

Hence it can be seen that, both the dimensions of the second area 52 and the predefined time value are two magnitudes that make it possible to adjust the ease with which the occupant 3 activates a parameter 12 of the vehicle 1. Thus, if some dimensions of the second area 52 are reduced, it will be harder for the gaze 32 of the occupant 3 to match said second area 52. In addition, if the predefined time value is a large value, e.g. 2 seconds, it will be harder for the gaze 32 to remain fixed for those 2 seconds on the second area 52, making it difficult for the parameter 12 represented in this second area 52 to be stored. Conversely, if some dimensions of the second area 52 are large, it will be simpler for the gaze 32 of the occupant 3 to match said second area 52. In addition, if the predefined time value is a small value, e.g. 0.3 seconds, it will be simpler for the gaze 32 to remain fixed for those 0.3 seconds on the second area 52, making it easier for the parameter 12 represented in this second area 52 to be stored.

It should be mentioned on the other hand, that preferably, the predefined value with which the counted time is compared and/or the surface area of the second area 52, are based on the at least one parameter 12 of the vehicle 1, a priority of the at least one represented parameter 12 and/or a determined actuation history of the occupant 3.

The match based on the size of the second area 52 and the predetermined time of gaze, varies according to the following criteria:
- Parameters 2 of the vehicle 1: speed, road conditions, etc. If, for example, the vehicle 1 is enduring rainy conditions or is travelling at high speed, matching is made easier, i.e. the size of actuatable area or second area 52 increases, and the predetermined time of gaze 32 decreases.
- Priority of information 5: Matching is made easier with the information 5 that is established as a priority (emergencies, state of the vehicle 1, etc.)
- Actuation history: Takes into account the icons representative of parameters 12 with which the driver or occupant 3 most interacts, making matching easier.

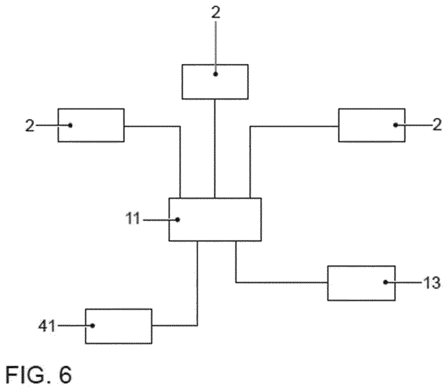

Figure 6 illustrates a schematic representation of the component elements of the device of the present invention, including a data processing device 11, an actuator 13, at least one graphical representation device 2, and an eyeball tracking device 41. Specifically it is observed that, having a plurality of graphical representation devices 2, these are connected with the data processing device 11, to which the actuator 13 and the eyeball tracking device 41 are also connected.

According to a preferred embodiment of the invention, there is one single actuator 13 for a plurality of graphical representation devices 2, so that by means of an orientation 4 of the at least one eyeball 31 of the occupant 3 the parameter 12 represented in any of the graphical representation devices 2 to be modified is determined, and by means of an actuation on the one single actuator 13 in the vehicle 1, it is made possible for the magnitude of the parameter 12 to be altered, whatever the parameter 12 and independently of the graphical representation device 2 wherein the parameter 12 has been represented.

By way of example, for all the functions, and through some buttons 14 on the steering wheel 16, the same actuatable portion 53 is acted upon independently of the screen or graphical representation device 2, in which it is represented. Said actuatable portion 53 is the only one for all the screens, making the selection of the actuatable portion 53 through the eyes or eyeball 31.

In addition, the actuator 13 is a voice control 33, a gesture control 34 or at least one button 14, wherein the at least one button 14 is arranged on an instrument panel 15 and/or on a steering wheel 16.

### List of numeric references:

- 1: vehicle
- 11: data processing device
- 12: parameter
- 13: actuator
- 14: button
- 15: instrument panel
- 16: steering wheel
- 2: graphical representation device
- 3: occupant
- 31: eyeball
- 32: gaze
- 33: voice
- 34: gesture
- 4: orientation
- 41: eyeball tracking device
- 5: information
- 51: first area
- 52: second area
- 53: portion
- 54: position
- 55: first visual effect
- 56: second visual effect

## Claims

1. Method for controlling at least one parameter (12) of a vehicle (1), wherein the method comprises the steps of:
i) representing at least one parameter (12) on at least one graphical representation device (2), wherein the at least one parameter (12) is represented in a portion (53) of the at least one graphical representation device (2);
ii) detecting an orientation (4) of at least one eyeball (31) of an occupant (3) of the vehicle (1);
iii) determining a match between the orientation (4) of the at least one eyeball (31) and the portion (53) of the at least one graphical representation device (2), comprising:
- determining a start of a match between the orientation (4) of the at least one eyeball (31) and the portion (53) of the at least one graphical representation device (2),
- determining an end of a match between the orientation (4) of the at least one eyeball (31) and the portion (53) of the at least one graphical representation device (2), and
- counting a period of time between the start and the end of the match between the orientation (4) of the at least one eyeball (31) and the portion (53) of the at least one graphical representation device (2),
iv) storing the at least one parameter (12) represented in the portion (53) if the match between the orientation (4) of the at least one eyeball (31) and the portion (53) is determined and if the period of time counted is greater than a predefined value,
wherein the predefined value is based on the at least one parameter (12), a priority of the at least one parameter (12) represented and/or a determined actuation history of the occupant (3),
v) determining an actuation by the occupant (3); and
vi) controlling the at least one parameter (12), wherein controlling the at least one parameter (12) is based on the at least one stored parameter (12) and based on the determined actuation by the occupant (3).

2. Method according to Claim 1, wherein the step of determining an actuation by the occupant (3) is a separate action from the step of determining the match between the orientation (4) of the at least one eyeball (31) and the portion (53) of the at least one graphical representation device (2).

3. Method according to either of the preceding claims, comprising an additional step of determining whether the at least one parameter (12) represented in the portion (53) of the at least one graphical representation device (2) is actuatable by the occupant (3), wherein step iv) comprises storing the at least one parameter (12) represented in the portion (53) if the at least one parameter (12) is determined as actuatable and if the match between the orientation (4) of the at least one eyeball (31) and the portion (53) is determined.

4. Method according to any one of the preceding claims, wherein step i) comprises:
a) defining a first area (51) in the at least one graphical representation device (2), wherein the first area (51) delimits an area wherein the at least one parameter (12) is represented, wherein the first area (51) is included in the portion (53), and
b) defining a second area (52), wherein the second area (52) delimits a zone wherein the at least one parameter (12) may be actuated by the occupant (3), wherein the second area (52) is included in the portion (53).

5. Method according to Claim 4, comprising an additional step of generating a first visual effect (55) on the graphical representation device (2), wherein the first visual effect (55) is based on the match determined between the orientation (4) of the at least one eyeball (31) and the first area (51).

6. Method according to Claim 1, wherein defining the second area (52) comprises establishing a surface area of the second area (52) based on the at least one parameter (12) of the vehicle (1), a priority of the at least one parameter (12) represented and/or a determined actuation history of the occupant (3).

7. Method according to Claim 6, wherein step iii) comprises determining a match between the orientation (4) of the at least one eyeball (31) and the second area (52).

8. Method according to Claim 7, comprising an additional step of generating a second visual effect (56) on the graphical representation device (2), wherein the second visual effect (56) is based on the match determined between the orientation (4) of the at least one eyeball (31) and the second area (52).

9. Method according to any one of the preceding claims, **characterized in that** step v) comprises determining an actuation by the occupant (3) by means of an actuator (13), wherein there is one single actuator (13) for a plurality of graphical representation devices (2).

10. Method according to Claim 9, wherein the actuator (13) is a voice control (33), a gesture control (34) or at least one button (14), wherein the at least one button (14) is arranged on an instrument panel (15) and/or on a steering wheel (16).

11. Data processing device (11), wherein the data processing device (11) comprises means configured to execute the method of Claim 1.

## Patentansprüche

1. Methode zum Steuern mindestens eines Parameters (12) eines Fahrzeugs (1), wobei die Methode folgende Schritte umfasst:
i) Darstellen mindestens eines Parameters (12) auf mindestens einem Gerät für die grafische Darstellung (2), wobei der mindestens eine Parameter (12) in einem Abschnitt (53) des mindestens einen Geräts für die grafische Darstellung (2) dargestellt wird;
ii) Erkennen der Ausrichtung (4) mindestens eines Augapfels (31) eines Passagiers (3) des Fahrzeugs (1);
iii) Ermitteln einer Übereinstimmung zwischen der Ausrichtung (4) des mindestens einen Augapfels (31) und dem Abschnitt (53) des mindestens einen Geräts für die grafische Darstellung (2), das folgende Schritte umfasst:
- Ermitteln des Beginns einer Übereinstimmung zwischen der Ausrichtung (4) des mindestens einen Augapfels (31) und dem Abschnitt (53) des mindestens einen Geräts für die grafische Darstellung (2),
- Ermitteln des Endes einer Übereinstimmung zwischen der Ausrichtung (4) des mindestens einen Augapfels (31) und dem Abschnitt (53) des mindestens einen Geräts für die grafische Darstellung (2), und
- Erfassen des Zeitraums zwischen dem Beginn und dem Ende der Übereinstimmung zwischen der Ausrichtung (4) des mindestens einen Augapfels (31) und dem Abschnitt (53) des mindestens einen Geräts für die grafische Darstellung (2),
iv) Speichern des mindestens einen im Abschnitt (53) dargestellten Parameters (12), wenn die Übereinstimmung zwischen der Ausrichtung (4) des mindestens einen Augapfels (31) und dem Abschnitt (53) ermittelt wurde und der erfasste Zeitraum größer als ein vordefinierter Wert ist,
wobei der vordefinierte Wert auf dem mindestens einen Parameter (12), der Priorität des mindestens einen dargestellten Parameters (12) und/oder des ermittelten Betätigungsverlaufs des Passagiers (3) beruht,
v) Ermitteln der Betätigung durch den Passagier (3); und
vi) Steuern des mindestens einen Parameters (12), wobei das Steuern des mindestens einen Parameters (12) auf dem mindestens einen gespeicherten Parameter (12) und auf der ermittelten Betätigung durch den Passagier (3) beruht.

2. Methode gemäß Anspruch 1, wobei es sich beim Ermitteln der Betätigung durch den Passagier (3) um einen vom Ermitteln der Übereinstimmung zwischen der Ausrichtung (4) des mindestens einen Augapfels (31) und dem Abschnitt (53) des mindestens einen Geräts für die grafische Darstellung (2) separaten Vorgang handelt.

3. Methode gemäß einem der vorherigen Ansprüche, die zudem das Ermitteln umfasst, ob der mindestens eine im Abschnitt (53) des mindestens einen Geräts für die graphische Darstellung (2) dargestellte Parameter (12) vom Passagier (3) betätigt werden kann, wobei Schritt iv) das Speichern des mindestens einen im Abschnitt (53) dargestellten Parameters (12) umfasst, wenn der mindestens eine Parameter (12) als betätigbar sowie die Übereinstimmung zwischen der Ausrichtung (4) des mindestens einen Augapfels (31) und dem Abschnitt (53) ermittelt wurde.

4. Methode gemäß einer der vorherigen Ansprüche wobei Schritt i) folgende Schritte umfasst:
a) Definieren eines ersten Bereichs (51) im mindestens einen Gerät für die grafische Darstellung (2), wobei der erste Bereich (51) einen Bereich abgrenzt, wobei mindestens ein Parameter (12) dargestellt wird, wobei der erste Bereich (51) im Abschnitt (53) enthalten ist, und
b) Definieren eines zweiten Bereichs (52), wobei der zweite Bereich (52) eine Zone abgrenzt, wobei der mindestens eine Parameter (12) durch den Passagier (3) betätigt werden kann, wobei der zweite Bereich (52) im Abschnitt (53) enthalten ist.

5. Methode gemäß Anspruch 4, die zudem das Erzeugen eines ersten visuellen Effekts (55) auf dem Gerät für die grafische Darstellung (2) umfasst, wobei der erste visuelle Effekt (55) auf der ermittelten Übereinstimmung zwischen der Ausrichtung (4) des mindestens einen Augapfels (31) und dem ersten Bereich (51) beruht.

6. Methode gemäß Anspruch 1, wobei das Ermitteln des zweiten Bereichs (52) das Festlegen eines Flächenbereichs des zweiten Bereichs (52) beruhend auf dem mindestens einen Parameter (12) des Fahrzeugs (1), auf der Priorität des mindestens einen dargestellten Parameters (12) und/oder auf des ermittelten Betätigungsverlaufs des Passagiers (3) umfasst.

7. Methode gemäß Anspruch 6, wobei Schritt iii) das Ermitteln einer Übereinstimmung zwischen der Ausrichtung (4) des mindestens einen Augapfels (31) und dem zweiten Bereich (52) umfasst.

8. Methode gemäß Anspruch 7, die zudem das Erzeugen eines zweiten visuellen Effekts (56) auf dem Gerät für die grafische Darstellung (2) umfasst, wobei der zweite visuelle Effekt (56) auf der ermittelten Übereinstimmung zwischen der Ausrichtung (4) des mindestens einen Augapfels (31) und dem zweiten Bereich (52) beruht.

9. Methode gemäß einem der vorherigen Ansprüche, die sich dadurch auszeichnet, dass Schritt v) das Ermitteln eines Betätigens durch den Passagier (3) mithilfe eines Betätigers (13) umfasst, wobei für mehrere Geräte für die grafische Darstellung (2) ein einzelner Betätiger (13) vorhanden ist.

10. Methode gemäß Anspruch 9, wobei es sich beim Betätiger (13) um eine Sprachsteuerung (33), eine Gestensteuerung (34) oder mindestens eine Schaltfläche (14) handelt, wobei die mindestens eine Schaltfläche (14) auf einer Armaturenbrett (15) und/oder an einem Lenkrad (16) angebracht ist.

11. Datenverarbeitungsgerät (11), wobei das Datenverarbeitungsgerät (11) Vorrichtungen zum Ausführen der Methode gemäß Anspruch 1 umfasst.

## Revendications

1. Procédé de commande d'au moins un paramètre (12) d'un véhicule (1), dans lequel ledit procédé comprend les étapes suivantes :
i) la représentation d'au moins un paramètre (12) sur au moins un dispositif de représentation graphique (2), dans lequel l'au moins un paramètre (12) est représenté dans une partie (53) de l'au moins un dispositif de représentation graphique (2) ;
ii) la détection d'une orientation (4) d'au moins un globe oculaire (31) d'un occupant (3) du véhicule (1) ;
iii) la détermination d'une correspondance entre l'orientation (4) de l'au moins un globe oculaire (31) et la partie (53) de l'au moins un dispositif de représentation graphique (2), comprenant :
- la détermination d'un début d'une correspondance entre l'orientation (4) de l'au moins un globe oculaire (31) et la partie (53) de l'au moins un dispositif de représentation graphique (2),
- la détermination d'une fin de la correspondance entre l'orientation (4) de l'au moins un globe oculaire (31) et la partie (53) de l'au moins un dispositif de représentation graphique (2), et
- le comptage d'une période de temps entre le début et la fin de la correspondance entre l'orientation (4) de l'au moins un globe oculaire (31) et la partie (53) de l'au moins un dispositif de représentation graphique (2),
iv) la mémorisation de l'au moins un paramètre (12) représenté dans la partie (53) lorsque la correspondance entre l'orientation (4) de l'au moins un globe oculaire (31) et la partie (53) est déterminée et lorsque la période de temps comptée est supérieure à une valeur prédéfinie,
dans lequel la valeur prédéfinie est basée sur l'au moins un paramètre (12), une priorité de l'au moins un paramètre (12) représenté et/ou un historique d'actionnement déterminé de l'occupant (3),
v) la détermination d'un actionnement par l'occupant (3) ; et
vi) la commande de l'au moins un paramètre (12), dans lequel la commande de l'au moins un paramètre (12) est basée sur l'au moins un paramètre (12) mémorisé et basée sur l'actionnement déterminé par l'occupant (3).

2. Procédé selon la revendication 1, dans lequel l'étape de détermination d'un actionnement par l'occupant (3) est une action distincte de l'étape de détermination de la correspondance entre l'orientation (4) de l'au moins un globe oculaire (31) et la partie (53) de l'au moins un dispositif de représentation graphique (2).

3. Procédé selon l'une quelconque des revendications précédentes, comprenant une étape supplémentaire consistant à déterminer si l'au moins un paramètre (12) représenté dans la partie (53) de l'au moins un dispositif de représentation graphique (2) peut être actionné par l'occupant (3), dans lequel l'étape iv) comprend la mémorisation de l'au moins un paramètre (12) représenté dans la partie (53) lorsque l'au moins un paramètre (12) est déterminé comme pouvant être actionné et lorsque la correspondance entre l'orientation (4) de l'au moins un globe oculaire (31) et la partie (53) est déterminée.

4. Procédé selon l'une quelconque des revendications précédentes, dans lequel l'étape i) comprend :
a) la définition d'une première zone (51) dans l'au moins un dispositif de représentation graphique (2), dans lequel la première zone (51) délimite une zone dans laquelle l'au moins un paramètre (12) est représenté, dans lequel la première zone (51) est incluse dans la partie (53), et
b) la définition d'une seconde zone (52), dans laquelle la seconde zone (52) délimite une zone dans laquelle l'au moins un paramètre (12) peut être actionné par l'occupant (3), dans lequel la seconde zone (52) est incluse dans la partie (53).

5. Procédé selon la revendication 4, comprenant une étape supplémentaire de génération d'un premier effet visuel (55) sur le dispositif de représentation graphique (2), dans lequel le premier effet visuel (55) est basé sur la correspondance déterminée entre l'orientation (4) de l'au moins un globe oculaire (31) et la première zone (51).

6. Procédé selon la revendication 1, dans lequel la définition de la seconde zone (52) comprend l'établissement d'une surface de la seconde zone (52) en fonction de l'au moins un paramètre (12) du véhicule (1), une priorité de l'au moins un paramètre (12) représenté et/ou un historique d'actionnement déterminé de l'occupant (3).

7. Procédé selon la revendication 6, dans lequel l'étape iii) comprend la détermination d'une correspondance entre l'orientation (4) de l'au moins un globe oculaire (31) et la seconde zone (52).

8. Procédé selon la revendication 7, comprenant une étape supplémentaire consistant à générer un second effet visuel (56) sur le dispositif de représentation graphique (2), dans lequel le second effet visuel (56) est basé sur la correspondance déterminée entre l'orientation (4) de l'au moins un globe oculaire (31) et la seconde zone (52).

9. Procédé selon l'une quelconque des revendications précédentes, **caractérisé en ce que** l'étape v) comprend la détermination d'un actionnement par l'occupant (3) au moyen d'un actionneur (13), dans lequel il y a un seul actionneur (13) pour une pluralité de dispositifs de représentation graphique (2).

10. Procédé selon la revendication 9, dans lequel l'actionneur (13) est une commande vocale (33), une commande gestuelle (34) ou au moins un bouton (14), dans lequel l'au moins un bouton (14) est disposé sur un tableau de bord (15) et/ou sur un volant (16).

11. Dispositif de traitement des données (11), dans lequel ledit dispositif de traitement des données (11) comprend un moyen configuré pour mettre en œuvre le procédé selon la revendication 1.
